# FASCICULE DE BREVET EUROPEEN

(11) **EP 1 201 420 B1**
(45) Date de publication et mention de la délivrance du brevet: **15.09.2004**
(21) Numéro de dépôt: 01402803.9
(22) Date de dépôt: 29.10.2001
(51) Int. Cl.: B32B 3/12, F02C 7/045, G10K 11/168, E04C 2/36

(54) **Panneau sandwich réducteur de bruit, notamment pour turboréacteur d'aéronef**
Schallabsorbiernedes Element insbesondere für Flugzeugtriebwerke
Sound absorbing panel particularly for aircraft engine

(30) Priorité: 31.10.2000 FR 0013977
(43) Date de publication de la demande: 02.05.2002
(73) Titulaire: AIRBUS FRANCE, 31060 Toulouse (FR)
(72) Inventeur: Porte, Alain, 31770 Colomiers (FR); Batard, Hervé, 31170 Tournefeuille (FR)
(74) Mandataire: Poulin, Gérard

(56) Documents cités:
- EP-A- 0 976 883
- FR-A- 2 792 757
- US-A- 3 952 831
- US-A- 5 785 919

## Description

### Domaine technique

L'invention concerne un panneau sandwich réducteur de bruit, du type comportant une âme alvéolée montée entre une couche résistive poreuse et un réflecteur.

Un tel panneau sandwich peut être utilisé avantageusement dans un turboréacteur d'aéronef, par exemple pour former la paroi intérieure de l'entrée d'air et des inverseurs de poussée.

### Etat de la technique

Dans les turboréacteurs d'aéronefs développés ces dernières années, la réduction du bruit constitue l'un des objectifs prioritaires. En effet, les réglementations actuelles concernant le niveau de bruit autour des aéroports imposent un seuil à ne pas dépasser. Au-delà de ce seuil, les compagnies aériennes sont obligées de payer des pénalités financières aux autorités aéroportuaires.

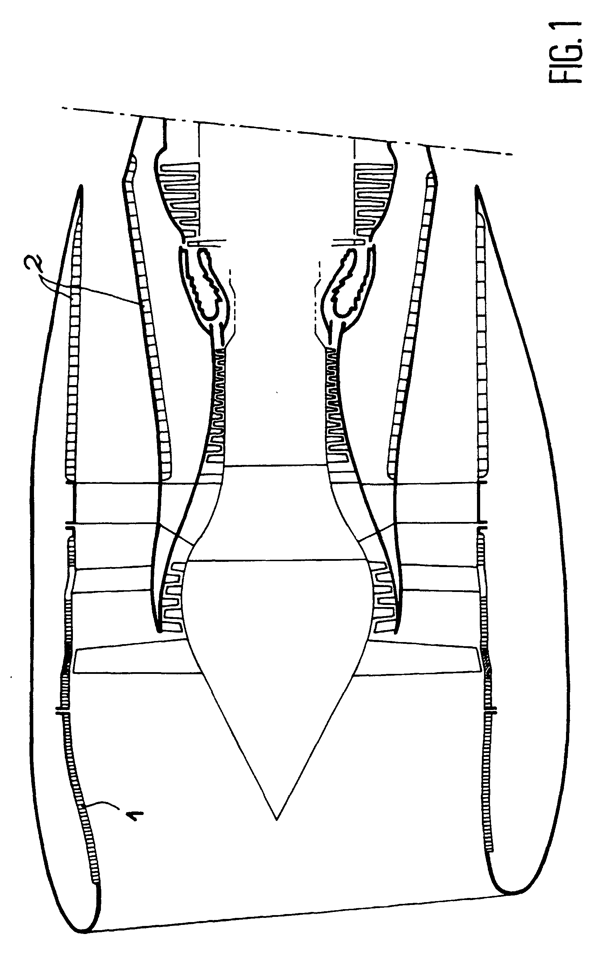

A cet effet et comme l'illustre en coupe et très schématiquement la figure 1 des dessins annexés, il est de pratique courante de réaliser la majeure partie de la paroi intérieure 1 de l'entrée d'air d'un turboréacteur, ainsi que les parois 2 des inverseurs de poussée sous la forme de panneaux sandwich réducteurs de bruit.

Ces panneaux sandwich réducteurs de bruit comprennent, en partant de la surface du panneau tournée vers l'extérieur, une couche résistive plus ou moins perméable à l'air, une âme alvéolée présentant le plus souvent une structure de type nid d'abeilles, et un réflecteur total arrière.

Dans cet agencement classique des panneaux sandwich réducteurs de bruit, la couche résistive a un rôle dissipatif. Lorsqu'une onde sonore la traverse, il se produit des effets visqueux qui transforment l'énergie acoustique en chaleur.

La hauteur de l'âme alvéolée permet d'accorder le panneau sur la fréquence caractéristique du bruit à atténuer. La dissipation du bruit dans la couche résistive est maximale lorsque la hauteur des cellules de l'âme alvéolée est égale au quart de la longueur d'onde de la fréquence du bruit à atténuer. Les cellules de la structure alvéolée se comportent alors comme des guides d'ondes perpendiculaires à la surface du panneau, ce qui leur confère une réponse de type "réaction localisée". Les cellules forment un assemblage de résonateurs quart d'onde en parallèle.

Le réflecteur arrière produit des conditions de réflexion totale indispensables au comportement décrit ci-dessus de l'âme alvéolée.

Un panneau sandwich réducteur de bruit implanté dans un turboréacteur d'aéronef doit répondre à différentes exigences, de nature acoustique, mécanique, structurale et aérodynamique.

Afin de remplir la fonction de réduction de bruit, il existe actuellement différents types de panneaux sandwich.

Dans les panneaux dits "à simple degré de liberté non linéaire" la couche résistive est constituée d'une couche perforée métallique ou composite. Cette structure présente l'avantage de permettre une bonne maîtrise du pourcentage de surface ouverte, de présenter une bonne résistance structurale et d'être facile à réaliser. Néanmoins, elle présente une forte non linéarité acoustique ainsi qu'une forte dépendance de la résistance à la vitesse de l'écoulement tangentielle en surface. De plus, puisque la fréquence amortie par chaque cellule dépend de sa profondeur et comme toutes les cellules du panneau ont la même profondeur, la plage de fréquences amortie par une telle structure est restreinte. En outre, lorsque la couche résistive est en matériau composite, la structure présente une faible résistance à l'érosion.

On connaît également des panneaux sandwich réducteurs de bruits dits "à simple degré de liberté linéaire". Dans ce cas, la couche résistive est une couche microporeuse constituée par exemple d'un tissu métallique, d'une tôle perforée associée à un tissu acoustique ou d'un tissu métallique associé à un tissu acoustique. Une telle structure permet d'ajuster la résistance acoustique en modifiant les composants de la couche microporeuse. Sa plage fréquentielle d'efficacité est raisonnable. Elle présente une non linéarité faible à modérée ainsi qu'une faible dépendance de la résistance acoustique à la vitesse de l'écoulement tangentiel en surface.

Toutefois, la réalisation d'un panneau sandwich à simple degré de liberté linéaire est plus compliquée que celle d'un panneau à simple degré de liberté non linéaire, du fait que la couche résistive comprend deux constituants. Si les composants ou les procédés d'assemblage ne sont pas maîtrisés, la structure peut présenter des zones de non homogénéité acoustique ainsi que des risques de délamination de la couche résistive. De plus, les risques de corrosion de la couche résistive imposent une contrainte supplémentaire concernant le choix des matériaux utilisés. Enfin, le procédé d'assemblage d'un tel panneau est long et coûteux.

On connaît également des panneaux sandwich réducteurs de bruit à "double degré de liberté". Un tel panneau comprend, en plus d'une couche résistive perforée et d'un réflecteur arrière, deux âmes alvéolées superposées, séparées par une couche résistive intermédiaire appelée "septum", généralement micro poreuse.

Par rapport aux autres type de panneaux sandwich, les panneaux à double degré de liberté présentent une plage de fréquences amorties plus large, une possibilité d'ajustement de la résistance acoustique à l'aide des deux couches résistives et une non linéarité acoustique faible à modérée. Néanmoins, des zones de non homogénéité acoustique apparaissent du fait du mauvais alignement des cellules des deux âmes alvéolées qui se produit inévitablement lors de la mise en forme du panneau. Il existe aussi des phénomènes parasites de propagation transverse dans les zones où les cellules des deux âmes alvéolées ne sont pas alignées. Enfin, le procédé d'assemblage d'un panneau de ce type est long et coûteux, car il faut assembler un par un les divers éléments de la structure.

Différentes solutions ont été proposées pour palier aux inconvénients des panneaux à double degré de liberté découlant de défauts d'alignement des cellules des deux âmes alvéolées.

Ainsi, dans le document GB-A-2 252 076, un panneau sandwich à double degré de liberté est obtenu à partir d'une âme alvéolée réalisée d'un seul tenant. La couche résistive intermédiaire est obtenue en présentant une feuille de séparation sur une face de cette âme et en appuyant sur la feuille de telle sorte qu'elle soit découpée en morceaux présentant les dimensions des cellules, par les bords des parois de celles-ci. Ces morceaux sont ensuite enfoncés, puis collés dans les cellules à une position prédéterminée. Toutefois, le problème de la mise en place précise des différents morceaux, de façon répétitive et fiable, n'est pas résolu dans ce document.

Le document GB-A-2 098 926 décrit un procédé permettant d'intégrer une feuille de séparation dans un panneau sandwich comparable à celui qui est décrit dans le document GB-A-2 252 076. Plus précisément, ce document propose d'utiliser une presse pour découper la feuille de séparation à la dimension des cellules à l'aide de l'âme alvéolée. Une fois cette opération réalisée, l'âme alvéolée incorporant les morceaux découpés de la feuille de séparation est placée dans un bain de liquide dense dont la profondeur est soigneusement contrôlée afin de pousser ces morceaux jusqu'à leur position définitive prédéterminée. Cette technique permet d'obtenir un panneau sandwich à double degré de liberté dans lequel les cellules sont bien alignées. Néanmoins, ce procédé est relativement long et délicat à mettre en oeuvre et il peut se révéler dangereux du fait de l'utilisation d'un liquide tel que du mercure. De plus, il est totalement inadapté dans le cas d'un panneau sandwich non plan.

Dans le document GB-A-1 463 918, un panneau sandwich à double degré de liberté est obtenu en utilisant une âme alvéolée unique dont les cellules sont divisées, dans le sens de la hauteur, en deux sous-cellules par des éléments séparateurs montés dans chaque cellule. Dans toutes les solutions décrites, les éléments séparateurs ont la même forme hexagonale et les mêmes dimensions que les cellules dans lesquelles ils sont reçus.

De plus, parmi les différentes solutions proposées dans le document GB-A-1 463 918, certaines proposent de relier plusieurs éléments séparateurs reçus dans des cellules alignées. Ces solutions paraissent avantageuses d'un point de vue industriel, car elles conduisent à réduire le temps de montage des éléments séparateurs, ce qui est d'autant plus appréciable que le nombre de cellules d'un panneau sandwich est généralement très élevé. Plus précisément, selon le document GB-A-1 463 918, les éléments séparateurs adjacents sont reliés soit par un pli qui chevauche le bord supérieur de la cloison séparant les cellules, soit directement par une jonction bord à bord des éléments séparateurs, traversant une encoche usinée dans la moitié supérieure de la cloison, de façon telle que son bord supérieur se trouve au même niveau que les éléments séparateurs.

Cependant, la mise en oeuvre des différentes techniques décrites dans le document GB-A-1 463 918 pose, dans la pratique, des difficultés pratiquement insurmontables.

En effet, la mise en place des éléments séparateurs décrits dans ce document serait pratiquement impossible du fait des variations de tailles et de formes des cellules qui se produisent inévitablement sur un panneau sandwich de grande dimension et de forme non plane. Ainsi, compte tenu de la petite taille des cellules, leurs cloisons sont relativement rigides et ne permettent pratiquement pas de compenser ces différences de tailles et de formes lors de la mise en place des éléments séparateurs décrits, dont la forme et les dimensions sont les mêmes que celles des cellules. Ce phénomène est accentué lorsque plusieurs éléments séparateurs sont reliés entre eux. En effet, les solutions proposées dans le document GB-A-1 463 918 ne permettent pas de faire varier l'écartement entre les éléments séparateurs voisins, pour tenir compte des tolérances de fabrication de la structure en nid d'abeilles.

Par ailleurs, dans le mode de réalisation selon lequel deux éléments séparateurs placés dans deux cellules voisines sont reliées directement par leurs bords adjacents et prennent appui sur le bord supérieur d'une encoche découpée dans la cloison séparant ces cellules, la découpe de cette cloison répétée sur l'ensemble du panneau affaiblit de façon difficilement acceptable la tenue mécanique de celui-ci.

### Exposé de l'invention

L'invention a précisément pour objet un panneau sandwich réducteur de bruit présentant une structure de type à double degré de liberté intégrant des éléments séparateurs rapportés conçus pour être montés aisément, à échelle industrielle, dans les cellules d'une âme alvéolée unique, sans pour autant entraîner une diminution de la tenue mécanique du panneau ni un affaiblissement de ses propriétés acoustiques.

Conformément à l'invention, ce résultat est obtenu au moyen d'un panneau sandwich réducteur de bruit, comprenant :
- une couche résistive ;
- un réflecteur ;
- une âme alvéolée unique, d'un seul tenant, placée entre la couche résistive et le réflecteur, et formant une pluralité de cellules juxtaposées, séparées par des cloisons ;
- des éléments séparateurs rapportés dans les cellules de façon à diviser celles-ci, dans le sens de la hauteur, en au moins deux sous-cellules ;
caractérisé en ce que chaque élément séparateur a un bord périphérique extérieur sensiblement circulaire et en ce que ledit panneau comprend de plus des organes de positionnement des éléments séparateurs dans les cellules, lesdits organes de positionnement étant solidaires des éléments séparateurs et prenant appui sur des bords des cloisons adjacents au réflecteur ou à la couche résistive.

Dans un panneau sandwich ainsi constitué, les éléments séparateurs donnent à la structure un agencement de type à double degré de liberté. Grâce à la forme circulaire du contour des éléments séparateurs, le montage de ces éléments dans les cellules, généralement de section hexagonale, peut être réalisé sans difficulté particulière, malgré les différences de formes et de tailles des cellules découlant des techniques de fabrication des structures en nid d'abeilles et du caractère éventuellement non plan du panneau.

Selon un mode de réalisation préféré de l'invention, le bord périphérique extérieur de chaque élément séparateur a un diamètre sensiblement égal à la distance séparant deux cloisons opposées d'une cellule. L'expression "sensiblement égal" prend notamment en compte le caractère imprécis de la distance entre les cloisons, découlant des tolérances de fabrication.

Avantageusement, les éléments séparateurs ont la forme de disques sensiblement plans. Le bord périphérique extérieur de chacun des éléments séparateurs peut alors être relevé vers le réflecteur ou vers la couche résistive, pour faciliter encore le montage.

Selon un premier mode de réalisation de l'invention, chaque organe de positionnement supporte alors un seul élément séparateur.

Chaque organe de positionnement peut alors comprendre une plaquette, placée entre l'élément séparateur qu'elle supporte et le réflecteur ou la couche résistive, sensiblement perpendiculairement à ce dernier, ladite plaquette comprenant deux parties en saillie, adjacentes au réflecteur ou à la couche résistive, qui prennent appui dans des encoches formées dans les bords adjacents au réflecteur ou à la couche résistive de deux cloisons opposées de la cellule correspondante.

En variante, chaque organe de positionnement peut aussi comprendre au moins deux languettes qui s'étendent entre l'élément séparateur qu'elles supportent et le réflecteur ou la couche résistive, chaque languette comprenant une extrémité repliée entre l'âme alvéolée et le réflecteur ou la couche résistive.

Dans ce cas, au moins l'une des languettes traverse avantageusement, de manière complète, une cellule adjacente à celle qui contient l'élément séparateur supporté par cette languette.

Selon un deuxième mode de réalisation de l'invention, chaque organe de positionnement supporte plusieurs éléments séparateurs, rapportés dans des cellules alignées selon une direction donnée, et intègre, entre chaque paire d'éléments séparateurs consécutifs qu'il supporte, au moins une languette apte à se déformer selon ladite direction. Cet agencement permet une mise en place aisée et rapide des éléments séparateurs, malgré les variations éventuelles du pas des cellules alignées découlant des tolérances de fabrication et du caractère éventuellement non plan du panneau.

Dans ce mode de réalisation, les éléments séparateurs supportés par un même organe de positionnement sont avantageusement placés dans une cellule sur deux, dans la direction d'alignement des cellules.

Dans ce cas, chaque organe de positionnement peut comprendre des plaquettes dont chacune est placée entre le réflecteur ou la couche résistive et l'un des éléments séparateurs supportés par cet organe de positionnement, perpendiculairement au réflecteur ou à la couche résistive. Une languette relie alors chaque paire de plaquettes consécutives en surplombant une cellule qui ne contient pas d'élément séparateur supporté par ledit organe de positionnement. De plus, la languette est incurvée par rapport à la direction d'alignement des cellules, afin de pouvoir se déformer selon cette direction.

Chaque organe de positionnement peut aussi comprendre des languettes qui relient les éléments séparateurs consécutifs et dont un tronçon droit surplombe une cellule qui ne contient pas d'élément séparateur supporté par cet organe de positionnement. Le tronçon droit a alors une longueur supérieure à la distance séparant deux cloisons opposées de la cellule, pour permettre la déformation de deux tronçons incurvés de la languette, reliant le tronçon droit aux éléments séparateurs contenus dans les cellules voisines.

Selon une variante du deuxième mode de réalisation de l'invention, les éléments séparateurs supportés par un même organe de positionnement sont placés dans des cellules adjacentes, dans la direction d'alignement des cellules. Chaque organe de positionnement comprend alors des languettes dont un tronçon droit chevauche les cloisons séparant les cellules adjacentes, du côté du réflecteur ou de la couche résistive, de façon à s'étendre de part et d'autre desdites cloisons. Dans ce cas, deux tronçons incurvés de chaque languette relient le tronçon droit aux éléments séparateurs contenus dans les cellules adjacentes.

### Brève description des dessins

On décrira à présent, à titre d'exemples non limitatifs, différents modes de réalisation de l'invention, en se référant aux dessins annexés, dans lesquels :
- la figure 1, déjà décrite, est une vue en coupe schématique illustrant les zones d'implantation de panneaux sandwich réducteurs de bruit dans un turboréacteur d'aéronef ;
- la figure 2 est une vue en coupe transversale illustrant un premier mode de réalisation d'un panneau sandwich réducteur de bruit conforme à l'invention ;
- la figure 3 est une vue de dessus du panneau sandwich de la figure 2, illustrant le premier mode de réalisation de l'invention, ainsi qu'une variante de ce mode de réalisation ;
- la figure 4 est une vue en perspective d'un élément séparateur selon le premier mode de réalisation de l'invention et de son organe de positionnement associé ;
- la figure 5 est une vue en perspective comparable à la figure 4, illustrant une variante du premier mode de réalisation de l'invention ;
- la figure 6 est une vue en perspective illustrant une autre variante du premier mode de réalisation de l'invention ;
- la figure 7 est une vue en perspective comparable à la figure 6, illustrant un deuxième mode de réalisation de l'invention ;
- la figure 8 est une vue en perspective comparable à la figure 7, illustrant une variante du deuxième mode de réalisation de l'invention ; et
- la figure 9 est une vue en perspective comparable aux figures 7 et 8, illustrant une autre variante du deuxième mode de réalisation de l'invention.

### Description détaillée de modes de réalisation préférés de l'invention

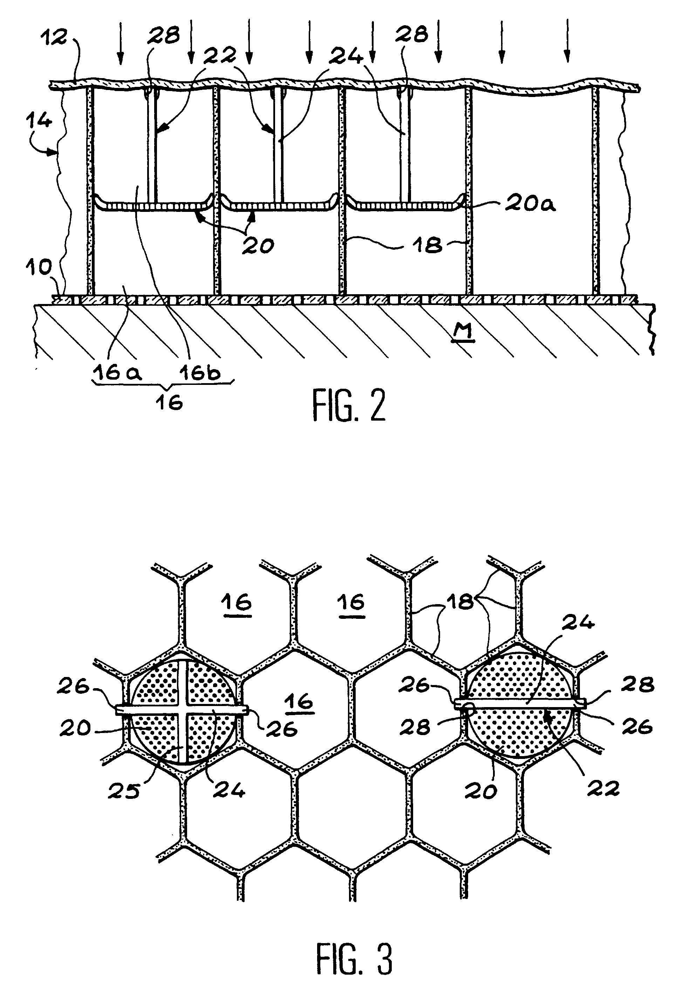

Comme l'illustre la figure 2, un panneau sandwich réducteur de bruit conforme à l'invention comprend notamment une couche résistive poreuse 10, un réflecteur 12 et une âme alvéolée unique 14, réalisée d'un seul tenant.

La couche résistive poreuse 10 est destinée à former la peau extérieure du panneau. En d'autres termes, elle est prévue pour être tournée vers l'extérieur de la structure dans laquelle doit être intégré le panneau. Ainsi, lorsque le panneau sandwich est intégré sur la face interne de l'entrée d'air ou aux parois de l'inverseur de poussée d'un turboréacteur d'aéronef, comme l'illustre la figure 1, la couche résistive poreuse 10 est tournée du côté de la veine aérodynamique qui circule dans le canal de soufflante du turboréacteur.

La couche résistive 10 est poreuse et ajourée ou perforée. Elle peut être métallique ou composite. Lorsque la couche résistive 10 est traversée par une onde acoustique, il se produit des effets visqueux qui transforment l'énergie acoustique en chaleur et assurent ainsi une dissipation de cette énergie acoustique.

Le réflecteur 12 est placé sur la face du panneau sandwich prévue pour être tournée vers l'intérieur de la structure dans laquelle ce panneau est intégré. Pour les ondes acoustiques qui pénètrent dans le panneau sandwich au travers de la couche résistive 10, à partir de la veine aérodynamique, le réflecteur 12 forme ainsi la face arrière du panneau.

Le réflecteur 12 est réalisé de façon connue afin d'assurer la réflexion totale des ondes acoustiques qui parviennent jusqu'à lui. A cet effet, il présente une structure continue dépourvue de perforation et de porosité. Il peut être métallique ou composite.

L'âme alvéolée unique 14 du panneau sandwich présente une structure de type nid d'abeilles. Cette structure se caractérise par une pluralité de cellules 16, de section hexagonale, juxtaposées les unes aux autres selon un agencement classique illustré en vue de dessus sur la figure 3. Les cellules 16 sont séparées les unes des autres par des cloisons planes 18, orientées perpendiculairement aux deux faces de l'âme alvéolée 14, et donc perpendiculairement à la couche résistive 10 et au réflecteur 12.

L'âme alvéolée 14 présente des cellules 16 dont la section est avantageusement supérieure à celle des cellules de l'âme alvéolée utilisée dans les panneaux sandwich réducteurs de bruit implantés à ce jour sur les turboréacteurs d'aéronefs. Ainsi, alors que les alvéoles des panneaux existants présentent habituellement une largeur comprise entre environ 6 mm et environ 9 mm, les cellules 16 du panneau 14 présentent de préférence une largeur comprise entre environ 10 mm et environ 20 mm. Dans les deux cas, la largeur est mesurée entre deux cloisons 18 en vis-à-vis.

Cet accroissement de la taille des alvéoles permet de réduire considérablement le nombre d'alvéoles contenues dans un panneau de dimension donnée. Cela conduit également à accroître la souplesse des cloisons 18 séparant les cellules. Toutefois, la taille proposée pour les cellules 16 reste suffisamment petite pour conserver au panneau des caractéristiques mécaniques et acoustiques satisfaisantes.

Il est à noter, par ailleurs, que les panneaux sandwich réducteurs de bruit ne sont généralement pas plans. Au contraire, comme l'illustre la figure 1 dans le cas d'un turboréacteur d'aéronef, la surface extérieure de ces panneaux définie par la couche résistive présente généralement une forme courbe, concave ou convexe. Il en découle que la géométrie propre à un panneau plan illustré sur la figure 2 ne correspond pas à la réalité. En particulier, les cloisons 18 séparant les cellules 16 ne sont pas parfaitement parallèles les unes aux autres et leur écartement peut varier selon que l'on se trouve à proximité de la couche résistive 10 ou du réflecteur 12. Ce caractère irrégulier et imparfait de la forme et des dimensions des cellules 16 est accru par les techniques de fabrication utilisées actuellement pour l'âme alvéolée 14. En effet, ces techniques de fabrication ont pour conséquence des variations de dimensions et de formes relativement importantes pour les cellules 16, lorsqu'on réalise un panneau de relativement grandes dimensions.

Conformément à l'invention, le panneau sandwich réducteur de bruit comprend de plus des éléments séparateurs 20, placés dans les cellules 16 de l'âme alvéolée 14, de façon à diviser chacune de ces cellules, dans le sens de la hauteur, c'est-à-dire perpendiculairement aux faces du panneau, en au moins deux sous-cellules 16a et 16b. Les sous-cellules 16a sont définies, par exemple, entre les éléments séparateurs 20 et la couche résistive 10 alors que les sous-cellules 16b sont définies entre les éléments séparateurs 20 et le réflecteur 12.

Les éléments séparateurs 20 sont réalisés en un matériau poreux, métallique ou composite, comparable à celui dans lequel est formée la couche résistive 10. Ils forment ainsi, dans chacune des cellules 16 du panneau, une couche résistive intermédiaire microporeuse. L'action de cette couche résistive intermédiaire combinée à celles de la couche résistive avant 10, du réflecteur 12 et des cellules 16 donnent à la structure du panneau un comportement de type à double degré de liberté.

Conformément à l'invention et comme l'illustre notamment la figure 3, les éléments séparateurs 20 présentent un bord périphérique extérieur sensiblement circulaire. Plus précisément, le diamètre du bord périphérique extérieur de chaque élément séparateur 20 est sensiblement égal à la largeur des cellules 16, c'est-à-dire à la distance qui sépare deux parois 18 opposées d'une cellule. Bien que d'autres formes soient possibles, telles que des formes bombées ou coniques, les éléments séparateurs ont avantageusement la forme de disques sensiblement plans.

Cet agencement permet une mise en place aisée des éléments séparateurs dans les cellules 16, du fait que les éléments séparateurs n'épousent pas étroitement la forme des cellules. Des variations dans cette forme ainsi que dans les dimensions des cellules, pratiquement inévitables sur un panneau de grandes dimensions, sont ainsi sans conséquence lors du montage de ces éléments.

Il est à noter que la différence de forme entre la section des cellules 16 et la périphérie des éléments séparateurs 20 se traduit par une légère perte quant à l'effet acoustique produit par ces éléments. Toutefois, étant donné que cette perte est proportionnelle au rapport des surfaces, elle est pratiquement négligeable, notamment lorsqu'on utilise des cellules 16 de relativement grande section comme cela est préconisé.

La mise en place des éléments séparateurs 20 dans les cellules 16 est également facilitée en relevant le bord périphérique 20a de chacun de ces éléments vers le réflecteur 12, comme l'illustre notamment la figure 2.

Le panneau sandwich réducteur de bruit comprend également des organes de positionnement 22 servant à supporter les éléments séparateurs 20 et à assurer leur positionnement précis, dans le sens de la hauteur, à l'intérieur de chacune des cellules 16. Ces organes de positionnement 22 sont réalisés, de préférence, dans un matériau pratiquement transparent du point de vue acoustique, tel qu'une feuille de clinquant de très faible épaisseur (par exemple, 1/10^{ème} de mm). De plus, cette feuille de clinquant est agencée de façon telle qu'elle n'est présente qu'en une épaisseur et en un endroit déterminé.

Les organes de positionnement 22 sont solidaires des éléments séparateurs 20 et ils sont conçus de façon telle que les deux caractéristiques suivantes sont satisfaites simultanément :
- les organes de positionnement 22 prennent appui sur les bords des cloisons 18 adjacents au réflecteur 12 ; et
- les organes de positionnement 22 forment, pour le réflecteur 12, des zones d'appui supplémentaires par rapport aux bords précités des cloisons 18.

La première de ces caractéristiques permet de maîtriser avec précision, de façon fiable et reproductible, la distance qui sépare chacun des éléments séparateurs 20 du réflecteur 12, sans diminuer les caractéristiques mécaniques du panneau. Le comportement acoustique du panneau sandwich peut ainsi être parfaitement maîtrisé quelle que soit la forme donnée à ce panneau. De plus, en préservant l'intégrité des cloisons 18 séparant les cellules 16, cette caractéristique garantit le maintien de propriétés mécaniques satisfaisantes.

La seconde caractéristique énoncée ci-dessus permet d'éviter un fléchissement trop important du réflecteur 12 entre les cloisons 18, qui pourrait se produire comme on l'a illustré sur la partie droite de la figure 2, du fait de l'utilisation d'une âme alvéolée présentant des cellules 16 de relativement grandes dimensions. En effet, un tel panneau sandwich est habituellement fabriqué comme on l'a illustré schématiquement sur la figure 2, en mettant en place sur un moule M la couche résistive 10, en positionnant ensuite l'âme alvéolée 14 sur la couche résistive 10, en plaçant alors dans les cellules 16 les éléments séparateurs 20 portés par les organes de positionnement 22, puis en mettant en place le réflecteur 12 sur l'âme alvéolée 14.

Cette technique de fabrication garantit, grâce au moule M, l'obtention de la forme souhaitée sur la surface extérieure du panneau. Toutefois, elle a pour conséquence un fléchissement du réflecteur 12 à l'intérieur de chacune des cellules 16, d'autant plus important que la taille de ces cellules est élevé. La présence des organes de positionnement 32 entre les cloisons 18 procure des zones d'appui supplémentaires qui permettent de réduire très sensiblement ce fléchissement, comme l'illustre la figure 2. La forme donnée au réflecteur 12 est ainsi beaucoup mieux contrôlée, ce qui assure pour ce réflecteur un comportement acoustique acceptable.

Comme on va à présent le décrire en détail en se référant successivement aux figures 2 à 9, les organes de positionnement 22 peuvent prendre différentes formes.

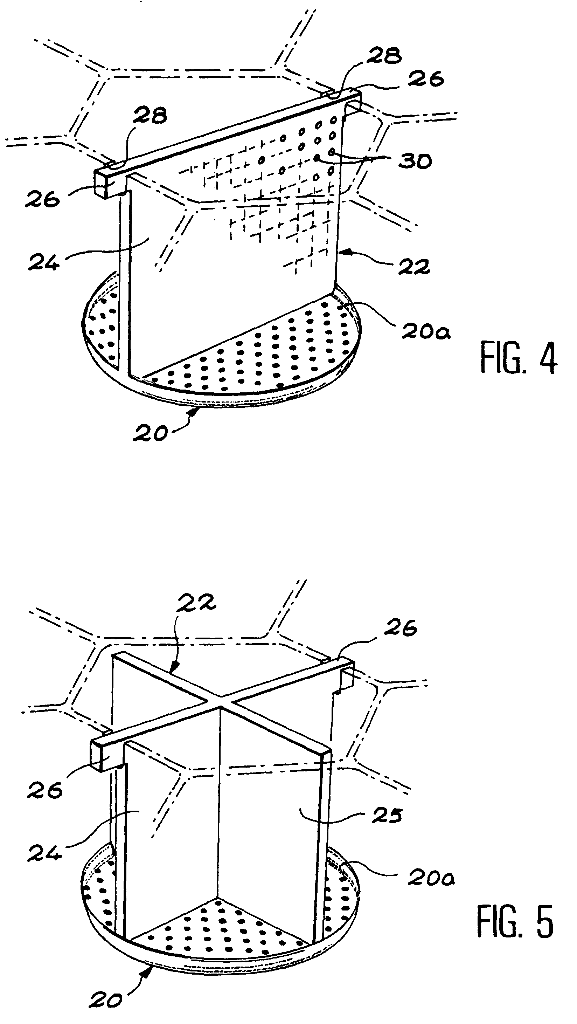

Dans un premier mode de réalisation de l'invention illustré sur les figures 2 et 4, ainsi que sur la partie droite de la figure 3, chaque organe de positionnement 22 supporte un seul élément séparateur 20.

De façon plus précise, chaque organe de positionnement 22 comprend dans ce cas une plaquette 24, de forme sensiblement rectangulaire. La plaquette 24 est située dans un plan perpendiculaire à celui de l'élément séparateur 20 qu'elle supporte, et orientée radialement par rapport au disque formé par cet élément séparateur dans la forme de réalisation représentée. Plus précisément, chaque élément séparateur 20 est fixé dans ce cas à l'un des bords de la plaquette 24, par exemple par soudure.

Le bord opposé de la plaquette 24, constituant la partie extrême de cette plaquette adjacente au réflecteur 12, est prolongé à chacune de ses extrémités par une partie en saillie 26, comme le montre la figure 4. Ces parties en saillie 26 sont prévues pour être reçues dans des encoches 28 usinées dans le bord adjacent au réflecteur 12 de deux cloisons 18 situées en vis-à-vis l'une de l'autre dans chacune des cellules 16. Il est à noter que les encoches 28 sont de petite taille et ne diminuent pas la tenue mécanique de l'âme alvéolée 14.

Cet agencement permet de positionner avec précision de façon fiable et reproductible chacun des éléments séparateurs 20 dans l'une des cellules 16 en prenant pour référence les bords des cloisons 18 adjacents au réflecteur 12.

Cet agencement permet également de définir des zones d'appui supplémentaires pour le réflecteur 12, en plus des bords des cloisons 18 adjacents à celui-ci. En effet, dans chacune des cellules 16, le bord droit de la plaquette 24 tourné vers le réflecteur 12 constitue un pont qui traverse cette cellule et forme une zone d'appui supplémentaire pour le réflecteur. Comme on l'a représenté sur la partie gauche de la figure 2, la forme géométrique du réflecteur 12 est ainsi mieux maîtrisée. Par conséquent, l'effet de réduction du bruit est très proche de l'effet théorique escompté, malgré l'augmentation préconisée de la taille des cellules 16.

Il est à noter par ailleurs que l'augmentation de la taille des cellules permet de limiter à une valeur acceptable le nombre d'éléments séparateurs 20 à mettre en place sur un panneau sandwich de dimensions déterminées. De plus, cette augmentation de taille se traduit par un accroissement de la souplesse des cloisons 18 qui contribue également à faciliter la mise en place de ces ensembles dans les cellules.

Afin de limiter la masse du panneau sandwich, les plaquettes 24 sont de préférence allégées par des perforations, fenêtres, etc. telles qu'illustrées en 30 sur la figure 4.

Par ailleurs, il est à noter que si le bord supérieur de la plaquette 24 est de préférence droit et continu comme l'illustrent les figures, ce bord peut aussi présenter une forme différente et comporter certaines discontinuités, sans sortir du cadre de l'invention.

Sur la figure 5 ainsi que sur la partie gauche de la figure 3, on a représenté une variante de la première forme de réalisation de l'invention.

Cette variante diffère de la forme de réalisation qui vient d'être décrite par le fait qu'au lieu de comprendre une seule plaquette 24, chacun des organes de positionnement 22 se compose de deux plaquettes 24 et 25 formant une croix en vue de dessus. En d'autres termes, une plaquette 25, orientée à angle droit par rapport à la plaquette 24 ainsi qu'à l'organe de positionnement 22 est associée à chacun des ensembles destiné à être placé dans les cellules 16 de l'âme alvéolée 14 du panneau.

Dans cette variante de réalisation, les plaquettes 25 sont dépourvues de parties en saillie. En effet, les plaquettes 25 sont normalement orientées selon une diagonale de l'hexagone formée en section par la cellule 16 dans laquelle est reçu cet ensemble (figure 3 et 5).

La variante de réalisation qui vient d'être décrite permet pratiquement de doubler les zones d'appui supplémentaires dont bénéficie le réflecteur 12 en plus des bords des cloisons 18. En effet, dans chacune des cellules 16, les bords supérieurs des plaquettes 24 et 25 affleurent le réflecteur 12 et constituent l'un et l'autre une zone d'appui supplémentaire pour celui-ci.

Comme précédemment, les plaquettes 24 et 25 sont de préférence allégées grâce à la présence de perforations, de fenêtres, etc..

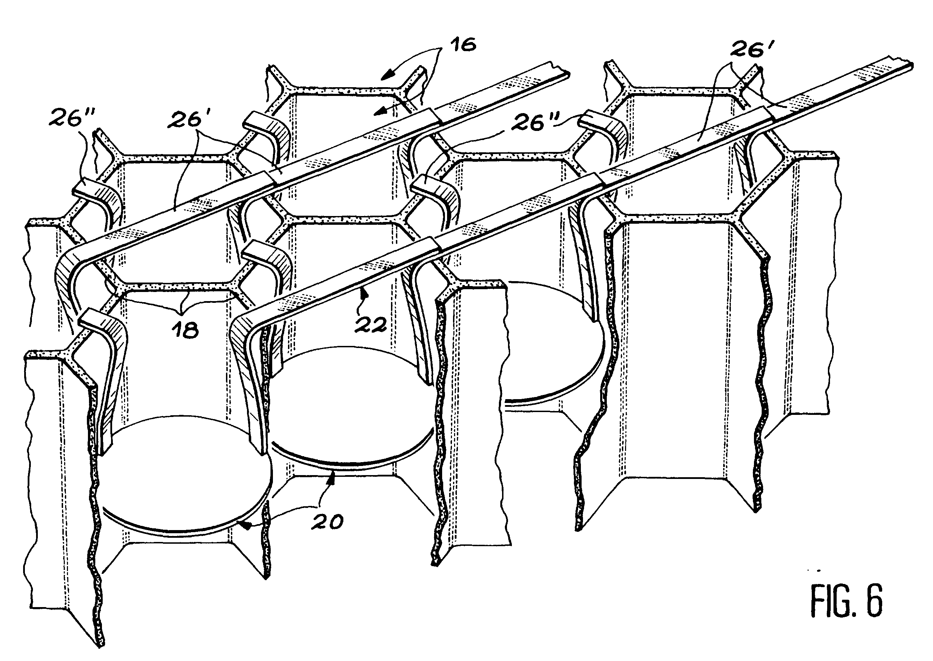

Une autre variante du premier mode de réalisation de l'invention est illustrée sur la figure 6.

Dans cette variante de réalisation, chacun des organes de positionnement 22 est supporté individuellement dans une cellule 16 de l'âme alvéolée 14 du panneau par deux languettes 26', 26". Chacune de ces languettes comprend une extrémité repliée qui s'étend dans le plan de joint entre l'âme alvéolée 14 et le réflecteur 12. Plus précisément, l'une au moins de ces languettes (la languette 26' sur la figure 6) traverse complètement une cellule 16 adjacente à la cellule dans laquelle est placé l'élément séparateur 20 supporté par cette languette. La languette 26' prend appui sur les bords de deux cloisons 18 en vis-à-vis de ladite cellule adjacente et s'étend dans le plan de joint précédemment défini. L'une des extrémités de la languette 26' se prolonge à l'intérieur de la cellule 16 dans laquelle est placé l'élément séparateur 20, de façon à supporter cet élément séparateur.

L'organe de positionnement 22 associé à chaque élément séparateur 20 comprend au moins une autre languette 26", qui s'étend à partir de l'élément séparateur 20 et prend appui sur le bord attenant au réflecteur 12 d'une cloison 18 de la cellule 16 dans laquelle est logé cet élément séparateur. Plus précisément, les languettes 26' et 26" prennent appui sur des cloisons 18 différentes de la cellule 16 recevant l'élément séparateur 20 lié à ces languettes.

L'agencement qui vient d'être décrit permet d'assurer un positionnement précis et fiable de chacun des éléments séparateurs 20 par rapport à la face de l'âme alvéolée 14 sur laquelle est monté le réflecteur 12. De plus, les languettes 26' forment des ponts qui traversent les cellules 16 dans le plan de joint entre l'âme alvéolée 14 et le réflecteur 12. Les languettes 26' définissent ainsi des zones d'appui complémentaires, pour le réflecteur 12, qui viennent s'ajouter aux zones d'appui constitués par les bords attenants des cloisons 18. Les propriétés acoustiques du panneau peuvent ainsi être préservées en dépit de l'utilisation d'une âme alvéolée présentant des cellules de relativement grandes dimensions.

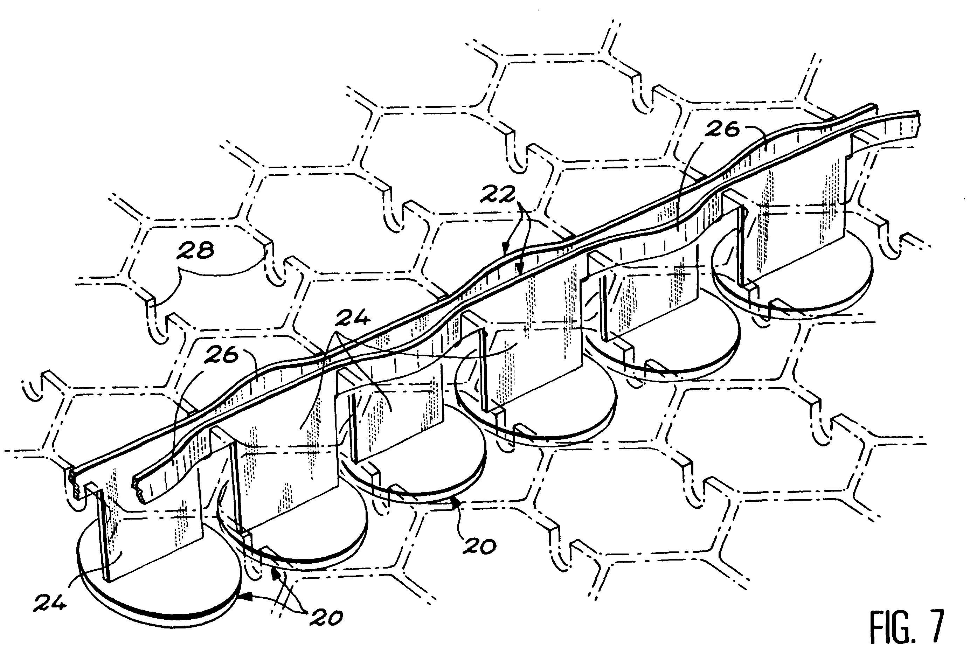

On décrira à présent, en se référant à la figure 7, un deuxième mode de réalisation de l'invention.

Ce deuxième mode de réalisation de l'invention se distingue principalement du premier mode de réalisation décrit précédemment en se référant aux figures 2 et 4 par le fait qu'un même organe de positionnement 22 supporte dans ce cas plusieurs éléments séparateurs 20 rapportés dans des cellules 16 alignées. Plus précisément, chaque organe de positionnement 22 comprend dans ce cas une pluralité de plaquettes 24 situées sensiblement dans un même plan et portant chacune un élément séparateur 20. Chaque organe de positionnement 22 comprend de plus une pluralité de languettes 26, reliant deux à deux les plaquettes 24 dans le prolongement des parties extrêmes de ces plaquettes adjacentes au réflecteur 12.

Du fait de cette configuration, au lieu d'avoir une longueur juste suffisante pour venir prendre appui dans une encoche 28 usinée dans l'une des cloisons 18, chacune des languettes 24 traverse dans ce cas une cellule 16 sur toute sa largeur, ainsi que deux encoches 28 usinées dans les bords adjacents au réflecteur 12 de deux cloisons 18 en vis-à-vis de cette cellule.

Dans l'agencement qui vient d'être décrit, chacun des organes de positionnement 22 supporte donc des éléments séparateurs 20 situés dans une cellule 16 sur deux d'une rangée de cellules de l'âme alvéolée 14 du panneau. Les autres cellules de cette rangée sont traversées par les languettes 24 à proximité du réflecteur 12.

En adjoignant à un tel ensemble une ensemble identique, monté dans la même rangée de cellules de façon à être décalée d'une cellule par rapport à l'autre ensemble, comme l'illustre la figure 7, on monte facilement et rapidement dans chaque rangée de cellules 16 d'un panneau sandwich des éléments séparateurs 20 positionnés avec précision par rapport à la face du panneau portant le réflecteur 12. De plus, les languettes 26 ainsi que les bords des plaquettes 24 adjacents au réflecteur 12 définissent dans chacune des cellules des zones d'appui supplémentaires pour le réflecteur.

Comme on l'a illustré sur la figure 7, les languettes 26 sont incurvées dans leur plan, de façon à permettre un ajustement aisé de l'écartement entre les éléments séparateurs 20, pour tenir compte des variations inévitables du pas des cellules 16 découlant des tolérances de fabrication de l'âme alvéolée 14 et de sa mise en forme éventuelle.

Le mode de réalisation de la figure 7 présente les mêmes avantages que le mode de réalisation et les variantes décrits précédemment en se référant aux figures 2 à 6. De plus, du fait que chaque ensemble placé dans les cellules 16 de l'âme alvéolée comprend plusieurs éléments séparateurs 20, le nombre de pièces à mettre en place est considérablement réduit, ce qui diminue dans des proportions comparables le temps de fabrication des panneaux.

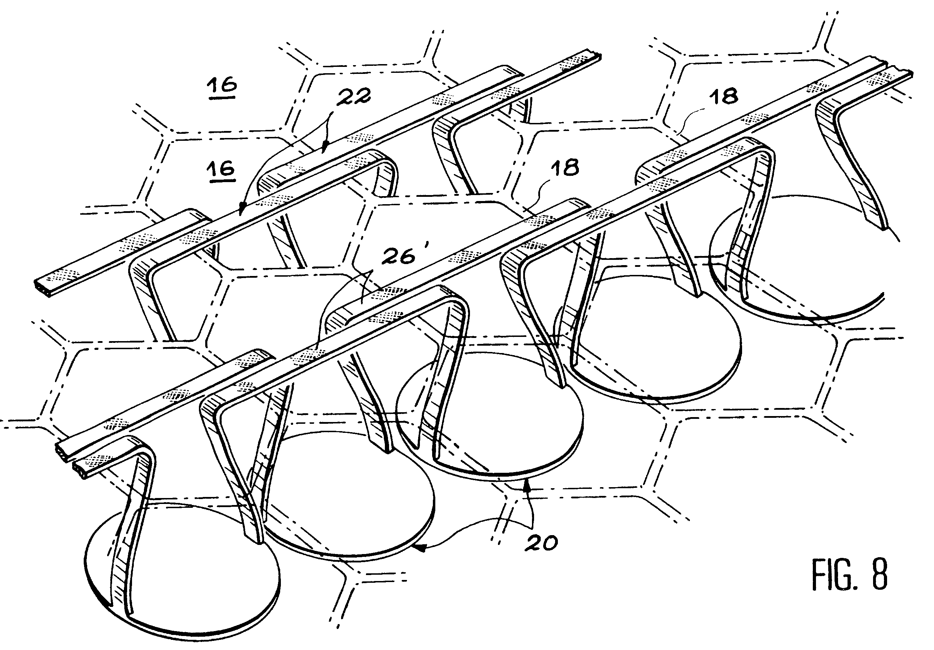

On décrira à présent, en se référant à la figure 8, une variante du deuxième mode de réalisation de l'invention.

Comme dans le mode de réalisation de la figure 7, un même organe de positionnement 22 supporte plusieurs éléments séparateurs 20, placés dans une sur deux des cellules 16 d'une rangée de cellules de l'âme alvéolée 14. Plus précisément, dans l'ensemble ainsi formé, deux éléments séparateurs 20 consécutifs sont liés l'un à l'autre par une languette 26' qui traverse la cellule 16 interposée entre les deux cellules dans lesquelles sont reçus les éléments séparateurs 20 reliés par cette languette. A cet effet, chaque languette 26' comporte un tronçon droit qui est en appui sur les bords attenant au réflecteur 12 de deux cloisons 18 en vis-à-vis de ladite cellule intermédiaire. En d'autres termes, les tronçons droits des languettes 26' sont placés dans le plan de joint qui sépare l'âme alvéolée 14 du réflecteur 12.

Les tronçons droits des languettes 26' ont une longueur supérieure à la distance séparant deux cloisons 18 opposées des cellules, c'est-à-dire à la largeur des cellules. De plus, chacune des languettes 26' comporte deux tronçons incurvés, qui relient les extrémités des tronçons droits à des parties diamétralement opposées des bords périphériques extérieurs des éléments séparateurs 20.

Cet agencement facilite la mise en place des différents éléments dans les cellules. En effet, il permet d'ajuster le pas entre les différents éléments séparateurs 20 d'un même ensemble, pour tenir compte des variations dimensionnelles inévitables consécutives aux tolérances de fabrication de l'âme alvéolée 14 et à sa mise en forme éventuelle.

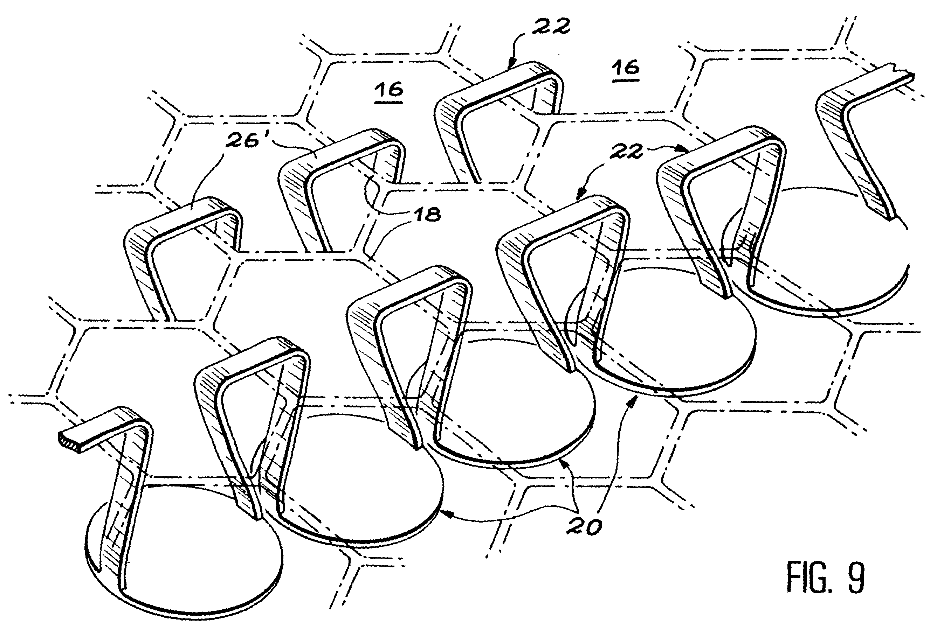

La figure 9 illustre une autre variante du deuxième mode de réalisation de l'invention. Dans ce cas, un même organe de positionnement 22 supporte des éléments séparateurs 20 placés dans des cellules 16 consécutives d'une même rangée de cellules de l'âme alvéolée du panneau.

L'organe de positionnement 22 comprend alors des languettes 26' dont chacune est en appui sur le bord tourné vers le réflecteur 12 d'une cloison 18 séparant deux cellules 16 consécutives de la rangée de cellules considérée. Cette languette 26' comprend un tronçon droit qui chevauche la cloison 18 et s'étend de part et d'autre du bord précité, dans le plan de joint formé entre l'âme alvéolée 14 et le réflecteur 12, jusqu'à proximité de la partie centrale de chacune des deux cellules considérées. Au-delà de ces extrémités, chacune des languettes 26' comprend deux parties incurvées qui se prolongent à l'intérieur des cellules 16 correspondantes pour venir supporter les éléments séparateurs 20 reçus dans ces cellules.

Cette variante du deuxième mode de réalisation de l'invention présente des avantages comparables à ceux de la variante décrite précédemment en se référant à la figure 8.

Bien entendu, les différents modes de réalisation et variantes qui viennent d'être décrits ne constituent que des exemples, auxquels la présente invention ne doit pas être limitée. En particulier, lorsque les organes de positionnement supportent plusieurs éléments séparateurs, ils peuvent prendre toute autre forme autorisant un déplacement relatif entre ces éléments dans la direction définie par la rangée de cellules dans laquelle ils sont reçus.

Par ailleurs, dans tous les modes de réalisation décrits, il est possible d'inverser la couche résistive 10 et le réflecteur 12. Le bord périphérique extérieur 20a de chaque élément séparateur 20 est alors relevé vers la couche résistive 10 et les organes de positionnement 22 des éléments séparateurs 20 prennent appui sur les bords des cloisons 18 adjacents à la couche résistive 10. Il en est de même pour les parties en saillie 26 et pour les languettes 26' et 26", qui peuvent également prendre appui sur les bords des cloisons 18 adjacents à la couche résistive 10.

## Revendications

1. Panneau sandwich réducteur de bruit, comprenant :
- une couche résistive (10) ;
- un réflecteur (12) ;
- une âme alvéolée unique (14), d'un seul tenant, placée entre la couche résistive (10) et le réflecteur (12), et formant une pluralité de cellules (16) juxtaposées, séparées par des cloisons (18) ;
- des éléments séparateurs (20) rapportés dans les cellules (16) de façon à diviser celles-ci, dans le sens de la hauteur, en au moins deux sous-cellules (16a,16b) ;
**caractérisé en ce que** chaque élément séparateur (20) a un bord périphérique extérieur (20a) sensiblement circulaire et **en ce que** ledit panneau comprend de plus des organes de positionnement (22) des éléments séparateurs (20) dans les cellules (16), lesdits organes de positionnement (22) étant solidaires des éléments séparateurs (20) et prenant appui sur des bords des cloisons (18) adjacents au réflecteur (12) ou à la couche résistive (10).

2. Panneau sandwich réducteur de bruit selon la revendication 1, dans lequel le bord périphérique extérieur (20a) de chaque élément séparateur (20) a un diamètre sensiblement égal à la distance séparant deux cloisons (18) opposées d'une cellule (16).

3. Panneau sandwich réducteur de bruit selon l'une quelconque des revendications 1 et 2, dans lequel les éléments séparateurs (20) ont la forme de disques sensiblement plans.

4. Panneau sandwich réducteur de bruit selon la revendication 3, dans lequel le bord périphérique extérieur (20a) de chaque élément séparateur (20) est relevé vers le réflecteur (12) ou vers la couche résistive (10).

5. Panneau sandwich réducteur de bruit selon l'une quelconque des revendications précédentes, dans lequel chaque organe de positionnement (22) supporte un seul élément séparateur (20).

6. Panneau sandwich réducteur de bruit selon la revendication 5, dans lequel chaque organe de positionnement (22) comprend au moins une plaquette (24), placée entre l'élément séparateur (20) qu'elle supporte et le réflecteur (12) ou la couche résistive (10), sensiblement perpendiculairement à ce dernier, ladite plaquette (24) comprenant deux parties en saillie (26), adjacentes au réflecteur (12) ou à la couche résistive (10), qui prennent appui dans des encoches (28) formées dans les bords adjacents au réflecteur (12) ou à la couche résistive (10) de deux cloisons (18) opposées de la cellule correspondante.

7. Panneau sandwich réducteur de bruit selon la revendication 5, dans lequel chaque organe de positionnement (22) comprend au moins deux languettes (26', 26") qui s'étendent entre l'élément séparateur (20) qu'elles supportent et le réflecteur (12) ou la couche résistive (10), chaque languette (26', 26") comprenant une extrémité repliée entre l'âme alvéolée (14) et le réflecteur (12) ou la couche résistive (10).

8. Panneau sandwich réducteur de bruit selon la revendication 7, dans lequel l'extrémité repliée d'au moins l'une (26') desdites languettes traverse complètement une cellule (16) adjacente à celle qui contient l'élément séparateur (20) supporté par cette languette.

9. Panneau sandwich réducteur de bruit selon l'une quelconque des revendications précédentes, dans lequel chaque organe de positionnement (22) supporte plusieurs éléments séparateurs (20), rapportés dans des cellules (16) alignées selon une direction donnée, et intègre, entre chaque paire d'éléments séparateurs (20) consécutifs qu'il supporte, au moins une languette (26) apte à se déformer selon ladite direction.

10. Panneau sandwich réducteur de bruit selon la revendication 9, dans lequel les éléments séparateurs (20) supportés par un même organe de positionnement (22) sont placés dans une cellule (16) sur deux, dans ladite direction, chaque organe de positionnement (22) comprenant des plaquettes (24) dont chacune est placée entre le réflecteur (12) ou la couche résistive (10) et l'un des éléments séparateurs (20) supportés par ledit organe de positionnement, perpendiculairement au réflecteur ou à la couche résistive, une languette (26) reliant chaque paire de plaquettes (24) consécutives en surplombant une cellule (16) qui ne contient pas d'élément séparateur supporté par ledit organe de positionnement, ladite languette (26) étant incurvée par rapport à ladite direction, afin de pouvoir se déformer selon cette direction.

11. Panneau sandwich réducteur de bruit selon la revendication 9, dans lequel les éléments séparateurs (20) supportés par un même organe de positionnement (22) sont placés dans une cellule (16) sur deux, chaque organe de positionnement (22) comprenant des languettes (26) qui relient les éléments séparateurs consécutifs et dont un tronçon droit surplombe une cellule (16) qui ne contient pas d'élément séparateur supporté par ledit organe de positionnement, ledit tronçon droit ayant une longueur supérieure à la distance séparant deux cloisons (18) opposées de ladite cellule, pour permettre la déformation de deux tronçons incurvés de la languette (26), reliant le tronçon droit aux éléments séparateurs (20) contenus dans les cellules voisines.

12. Panneau sandwich réducteur de bruit selon la revendication 9, dans lequel les éléments séparateurs (20) supportés par un même organe de positionnement (22) sont placés dans les cellules (16) adjacentes, dans ladite direction, chaque organe de positionnement (22) comprenant des languettes (26') dont un tronçon droit chevauche les cloisons (18) séparant les cellules adjacentes, du côté du réflecteur (12) ou de la couche résistive (10), de façon à s'étendre de part et d'autre desdites cloisons, deux tronçons incurvés de chaque languette reliant le tronçon droit aux éléments séparateurs (20) contenus dans les cellules adjacentes.

## Claims

1. A noise reduction sandwich panel, comprising:
- a resistive layer (10);
- a reflector (12);
- a unique waffle core (14), as a single piece, placed between the resistive layer (10) and the reflector (12), and forming a plurality of juxtaposed cells (16), separated by partitions (18);
- separative components (20) inserted in cells (16) in order to divide the latter in the direction of height, into at least two subcells (16a, 16b);
**characterized in that**, each separative component (20) has a substantially circular external peripheral edge (20a) and **in that** said panel further comprises positioning units (22) for the separative components (20) in the cells (16), said positioning units (22) being secured to the separative components (20) and supported on the edges of the partitions (18) adjacent to the reflector (12) or to the resistive layer (10).

2. The noise reduction sandwich panel according to claim 1, wherein the external peripheral edge (20a) of each separative component (20) has a diameter substantially equal to the distance separating two opposite partitions (18) of a cell (16).

3. The noise reduction sandwich panel according to any of claims 1 or 2, wherein the separative components (20) have the shape of substantially planar disks.

4. The noise reduction sandwich panel according to claim 3, wherein the external peripheral edge (20a) of each separative components (20) is raised towards the reflector (12) or towards the resistive layer (10).

5. The noise reduction sandwich panel according to any of the preceding claims, wherein each positioning unit (22) supports only a single separative component (20).

6. The noise reduction sandwich panel according to claim 5, wherein each positioning unit (22) comprises at least one small plate (24) placed between the separative component (20) which it supports and the reflector (12) or the resistive layer (10), substantially perpendicularly to the latter, said small plate (24) comprising two protruding portions (26), adjacent to the reflector (12) or to the resistive layer (10), which are supported in notches (28) formed in the edges adjacent to the reflector (12) or to the resistive layer (10) of two opposite partitions (18) of the corresponding cell.

7. The noise reduction sandwich panel according to claim 5, wherein each positioning unit (22) comprises at least two tabs (26', 26") which extend between the separative component (20) which they support and the reflector (12) or the resistive layer (10), each tab (26', 26") comprising a folded back end between the waffle core (14) and the reflector (12) or the resistive layer (10).

8. The noise reduction sandwich panel according to claim 7, wherein the folded back end of at least one (26') of said tabs completely crosses a cell (16) adjacent to the one which contains the separative component (20) supported by this tab.

9. The noise reduction sandwich panel according to any of the preceding claims, wherein each positioning unit (22) supports several separative components (20), inserted in cells (16) aligned along a given direction, and integrates, between each pair of consecutive separative components (20) which it supports, at least a tab (26) able to deform along said direction.

10. The noise reduction sandwich panel according to claim 9, wherein the separative components (20) supported by a same positioning unit (22) are placed in one cell (16) out of two, in said direction, each positioning unit (22) comprising small plates (24), each of which is placed between the reflector (12) or the resistive layer (10) and one of the separative components (20) supported by said positioning unit, perpendicularly to the reflector or to the resistive layer, a tab (26) joining up each pair of consecutive small plates (24) by overhanging a cell (16) which does not contain any separative component supported by said positioning unit, said tab (26) being curved with respect to said direction, in order to be able to deform along this direction.

11. The noise reduction sandwich panel according to claim 9, wherein the separative components (20) supported by a same positioning unit (22) are placed in one cell (16) out of two, each positioning unit (22) comprising tabs (26) which join up the consecutive separative components and a straight section of which overhangs a cell (16) which does not contain any separative component supported by said positioning unit, said straight section having a length greater than the distance separating two opposite partitions (18) of said cell, in order to allow the deformation of two curved sections of the tab (26) joining up the straight section to the separative components (20) contained in the neighboring cells.

12. The noise reduction sandwich panel according to claim 9, wherein separative components (20) supported by a same positioning unit (22) are placed in the adjacent cells (16), in said direction, each positioning unit (22) comprising tabs (26'), a straight section of which overlaps the partitions (18) separating the adjacent cells, on the reflector (12) or the resistive layer (10) side, so as to extend on both sides of said partitions, two curved sections of each tab joining up the straight section to the separative components (20) contained in the adjacent cells.

## Patentansprüche

1. Geräuschdämmungs-Sandwichplatte, die umfasst:
- eine resistive Schicht (10);
- einen Reflektor (12);
- einen einzigen, einteiligen wabenförmigen Kern (14), der zwischen der resistiven Schicht (10) und dem Reflektor (12) angeordnet ist und mehrere nebeneinander liegende Zellen (16) bildet, die durch Trennwände (18) getrennt sind;
- Trennelemente (20), die in die Zellen (16) in der Weise eingesetzt sind, dass sie diese in Höhenrichtung in wenigstens zwei Unterzellen (16a, 16b) unterteilen;
**dadurch gekennzeichnet, dass** jedes Trennelement (20) einen im Wesentlichen kreisförmigen äußeren Umfangsrand (20a) besitzt und dass die Platte außerdem Positionierungselemente (22) für die Trennelemente (20) in den Zellen (16) umfasst, wobei die Positionierungselemente (22) mit den Trennelementen (20) fest verbunden sind und sich an den Rändern der Trennwände (18) in der Nähe des Reflektors (12) oder der resistiven Schicht (10) abstützen.

2. Geräuschdämmungs-Sandwichplatte nach Anspruch 1, bei der der äußere Umfangsrand (20a) jedes Trennelements (20) einen Durchmesser besitzt, der im Wesentlichen gleich dem Abstand ist, der zwei gegenüberliegende Trennwände (18) einer Zelle (16) trennt.

3. Geräuschdämmungs-Sandwichplatte nach einem der Ansprüche 1 und 2, bei der die Trennelemente (20) die Form von im Wesentlichen ebenen Scheiben besitzen.

4. Geräuschdämmungs-Sandwichplatte nach Anspruch 3, bei der der äußere Umfangsrand (20a) jedes Trennelements (20) zu dem Reflektor (12) oder zu der resistiven Schicht (10) umgebogen ist.

5. Geräuschdämmungs-Sandwichplatte nach einem der vorhergehenden Ansprüche, bei der jedes Positionierungselement (22) ein einziges Trennelement (20) trägt.

6. Geräuschdämmungs-Sandwichplatte nach Anspruch 5, bei der jedes Positionierungselement (22) wenigstens ein Plättchen (24) umfasst, das zwischen dem von ihm unterstützten Trennelement (20) und dem Reflektor (12) oder der resistiven Schicht (10) im Wesentlichen senkrecht zu diesem bzw. dieser angeordnet ist, wobei das Plättchen (24) zwei vorstehende Teile (26) aufweist, die zu dem Reflektor (12) oder zu der resistiven Schicht (10) benachbart sind und sich in Nuten (28) abstützen, die in den zum Reflektor (12) oder zu der resistiven Schicht (10) benachbarten Rändern zweier gegenüberliegender Trennwände (18) der entsprechenden Zelle ausgebildet sind.

7. Geräuschdämmungs-Sandwichplatte nach Anspruch 5, bei der jedes Positionierungselement (22) wenigstens zwei Zungen (26', 26") umfasst, die sich zwischen dem von ihnen unterstützen Trennelement (20) und dem Reflektor (12) oder der resistiven Schicht (10) erstrecken, wobei jede Zunge (26', 26") ein Ende besitzt, das zwischen dem wabenförmigen Kern (14) und dem Reflektor (12) oder der resistiven Schicht (10) umgebogen ist.

8. Geräuschdämmungs-Sandwichplatte nach Anspruch 7, bei der das umgebogene Ende wenigstens einer (26') der Zungen vollständig durch eine Zelle (16) verläuft, die zu jener benachbart ist, die das von dieser Zunge unterstützte Trennelement (20) enthält.

9. Geräuschdämmungs-Sandwichplatte nach einem der vorhergehenden Ansprüche, bei der jedes Positionierungselement (22) mehrere Trennelemente (20) unterstützt, die in die Zellen, die auf eine gegebene Richtung ausgerichtet sind, eingesetzt sind, und zwischen jedem Paar aufeinander folgender Trennelemente (20), die es unterstützt, wenigstens eine einteilig ausgebildete Zunge (26), die sich in der genannten Richtung verformen kann, aufweist.

10. Geräuschdämmungs-Sandwichplatte nach Anspruch 9, bei der die Trennelemente (20), die von demselben Positionierungselement (22) unterstützt sind, in einer (16) von zwei Zellen in der genannten Richtung angeordnet sind, wobei jedes Positionierungselement (22) Plättchen (24) umfasst, wovon jedes zwischen dem Reflektor (12) oder der resistiven Schicht (10) und einem der Trennelemente (20), die von dem Positionierungselement unterstützt werden, senkrecht zu dem Reflektor oder der resistiven Schicht angeordnet ist, wobei eine Zunge (26) jedes Paar aufeinander folgender Plättchen (24) verbindet, indem sie von einer Zelle (16) vorsteht, die kein von dem Positionierungselement unterstütztes Trennelement enthält, wobei die Zunge (26) in Bezug auf die genannte Richtung gekrümmt ist, um sich in dieser Richtung verformen zu können.

11. Geräuschdämmungs-Sandwichplatte nach Anspruch 9, bei der die Trennelemente (20), die vom selben Positionierungselement (22) unterstützt sind, in einer (16) von zwei Zellen angeordnet sind, wobei jedes Positionierungselement (22) Zungen (26) umfasst, die die aufeinander folgenden Trennelemente verbinden und wovon ein geradliniges Teilstück von einer Zelle (16) vorsteht, die kein von diesem Positionierungselement unterstütztes Trennelement enthält, wobei dieses geradlinige Teilstück eine Länge besitzt, die größer als der Abstand ist, der zwei gegenüberliegende Trennwände (18) der Zelle trennt, damit eine Verformung von zwei gekrümmten Teilstücken der Zunge (26), die das geradlinige Teilstück mit in den benachbarten Zellen enthaltenen Trennelementen (20) verbinden, ermöglicht wird.

12. Geräuschdämmungs-Sandwichplatte nach Anspruch 9, bei der die Trennelemente (20), die von demselben Positionierungselement (22) unterstützt sind, in den benachbarten Zellen (16) in der genannten Richtung angeordnet sind, wobei jedes Positionierungselement (22) Zungen (26') umfasst, wovon ein geradliniges Teilstück die diese benachbarten Zellen trennenden Trennwände (18) auf Seiten des Reflektors (12) oder der resistiven Schicht (10) übergreift, so dass es sich beiderseits dieser Trennwände erstreckt, wobei zwei gekrümmte Teilstücke dieser Zunge das geradlinige Teilstück mit den in den angrenzenden Zellen enthaltenen Trennelementen (20) verbinden.
